# EUROPÄISCHE PATENTANMELDUNG

(11) **EP 1 153 882 A1**
(43) Veröffentlichungstag der Anmeldung: **14.11.2001**
(21) Anmeldenummer: 00107917.7
(22) Anmeldetag: 13.04.2000
(51) Int. Cl.: B67D 5/14

(54) **Verfahren zum Steuern des Füllstandes**

(71) Anmelder: esyoil AG, 22763 Hamburg (DE)
(72) Erfinder: Bergmann, Klaus, 21339 Lüneburg (DE)
(74) Vertreter: UEXKÜLL & STOLBERG

(57) **Zusammenfassung**

Bei einem Verfahren zum Steuern des Füllstandes in einem zur Aufnahme einer Flüssigkeit eingerichteten Behälter (1) wird der Füllstand mit einem in dem oder an dem Behälter (1) angeordneten Sensor (2) erfasst und über ein Füllstand-Datensignal mittels Datenfernübertragung zu einer Zentraleinrichtung (10) übertragen, die zum Empfangen und Verarbeiten von Füllstand-Datensignalen einer Vielzahl miteinander nicht in Beziehung stehender Behälter eingerichtet ist. In der Zentraleinrichtung (10) wird der Füllstand mit Vorgabedaten verarbeitet. In Abhängigkeit von dem Ergebnis der Verarbeitung werden Reaktionsdaten erzeugt, die eine Übertragung von Reaktions-Datensignalen mittels Datenfernübertragung von der Zentraleinrichtung (10) zu mindestens einem Empfänger bewirken. In Antwort auf empfangene Datensignale wird ein zum Nachliefern der Flüssigkeit eingerichteter Empfänger zum Nachfüllen des Behälters (1) veranlasst.

## Beschreibung

Die Erfindung betrifft ein Verfahren zum Steuern des Füllstandes in einem zur Aufnahme einer Flüssigkeit eingerichteten Behälter.

Es ist bekannt, den Füllstand eines relativ kleinen Behälters zu steuern, indem aus einem größeren Vorratsbehälter bei Bedarf (z.B. wenn ein vorgegebener Füllstand unterschritten wird) Flüssigkeit in den kleinen Behälter nachgefüllt wird. Bei größeren Behältern ist ein solches Verfahren jedoch nicht praktikabel. In diesem Falle muss der Betreiber des Behälters den Füllstand regelmäßig selbst überwachen und, wenn er es für erforderlich hält, bei einem zum Nachliefern der Flüssigkeit eingerichteten Händler eine Flüssigkeitslieferung bestellen. Eine derartige Vorgehensweise ist z.B. bei Öltanks oder Treibstofftanks im privaten und gewerblichen Bereich üblich.

Nachteilig ist dabei, dass der Betreiber des Behälters ständig den Füllstand kontrollieren und aktiv eine Nachlieferung der Flüssigkeit veranlassen muss. Dies birgt auch ein Sicherheitsrisiko, da ein unerwartet leerer Behälter erhebliche Kostenfolgen haben kann. Um solche Nachteile zu minimieren, besteht daher die Tendenz, den Behälter möglichst groß auszulegen, was aber letztlich teuer ist.

Es ist Aufgabe der Erfindung, ein Verfahren zum Steuern des Füllstandes in einem zur Aufnahme einer Flüssigkeit eingerichteten Behälter zu schaffen, das zuverlässig und kostengünstig durchgeführt werden kann.

Diese Aufgabe wird gelöst durch ein Verfahren mit den Merkmalen des Anspruchs 1. Vorteilhafte Ausgestaltungen der Erfindung ergeben sich aus den Unteransprüchen.

Bei dem erfindungsgemäßen Verfahren zum Steuern des Füllstandes in einem zur Aufnahme einer Flüssigkeit eingerichteten Behälter werden Füllstanddaten mittels Datenfernübertragung zu einer Zentraleinrichtung geleitet, die zum Empfangen und Verarbeiten von Füllstanddaten einer Vielzahl von Behältern eingerichtet ist. Diese Behälter können ganz unterschiedlicher Art sein und einer Vielzahl von Betreibern gehören, die voneinander unabhängig sind. Die Zentraleinrichtung lässt sich rationell und kostengünstig führen.

In der Zentraleinrichtung werden für einen gegebenen Behälter die Füllstanddaten mit Vorgabedaten, die auf den Behälter und dessen Betreiber abgestimmt sind, verarbeitet, wobei Reaktionsdaten erzeugt werden. Diese Reaktionsdaten bestimmen den weiteren Verlauf des Verfahrens. Im einfachsten Fall ist z.B. das Ergebnis der Verarbeitung, dass der Füllstand in dem Behälter so niedrig ist, dass der Behälter ohne weitere Rückfrage bei dessen Betreiber nachgefüllt werden soll; entsprechende Reaktions-Datensignale gehen dann an einen zum Nachliefern der Flüssigkeit eingerichteten Empfänger, z.B. einen Händler, und veranlassen eine automatische Bestellung und Lieferung der erforderlichen Flüssigkeitsmenge.

Bei einer vorteilhaften Ausgestaltung des Verfahrens gehen die Reaktions-Datensignale zu dem Betreiber des Behälters und melden ihm, dass der Behälter nachgefüllt werden sollte. Der Betreiber kann dann entscheiden, ob dies jetzt oder später erfolgen soll. Auch dieser Vorgang kann vollautomatisch ablaufen, indem z.B. als Entscheidungskriterium die Höhe eines Kontostandes gewählt wird, der sich automatisch abfragen lässt. Die Bestätigung des Betreibers, dass der Behälter nachgefüllt werden soll, wird mittels Datenfernübertragung weitergeleitet, und zwar vorzugsweise über die Zentraleinrichtung, so dass von dort aus z.B. ein Händler zum Nachliefern der Flüssigkeit veranlasst werden kann.

Bei einer weiteren vorteilhaften Ausgestaltung des Verfahrens wird ein Lieferant von mehreren in Frage kommenden Lieferanten der Flüssigkeit in einem automatischen Preisvergleichsverfahren ausgewählt und veranlasst, den Behälter nachzufüllen. Das Preisvergleichsverfahren benutzt die bei der Verarbeitung in der Zentraleinrichtung erzeugten Reaktionsdaten (gegebenenfalls nach Bestätigung durch den Betreiber des Behälters) als Eingabe, so dass die Lieferanten über die Menge der zu liefernden Flüssigkeit und weitere Angaben, wie z.B. den Lieferort, informiert sind und der Preis vorzugsweise vollautomatisch anhand allgemeiner Vorgaben des Lieferanten darauf eingestellt werden kann. Vorzugsweise werden die von den Lieferanten ausgegebenen spezifischen Informationen in der Zentraleinrichtung gesammelt, verglichen und verarbeitet, so dass der Lieferant, der den Zuschlag erhält, von dort aus mittels Datenfernübertragung informiert wird.

Das erfindungsgemäße Verfahren entlastet den Betreiber des Behälters und gewährleistet eine rechtzeitige Nachlieferung der Flüssigkeit, was der Sicherheit dient. Für die beteiligten Lieferanten der Flüssigkeit hat das Verfahren den Vorteil, dass entsprechende Lieferdaten von vielen Kunden oder potentiellen Kunden sofort und gleichzeitig zur Verfügung stehen, so dass sich Lieferungen rationeller planen lassen und die Transportwege optimiert werden können. Der Betreiber des Behälters kann mit einem kleineren Behälter oder Tank auskommen, weil das Verfahren ein automatisches Nachliefern der Flüssigkeit ermöglicht, so dass mit dem Nachfüllen weniger Umstände verbunden sind und der Behälter daher ohne weiteres öfter nachgefüllt werden kann.

Es ist auch denkbar, dass in der Zentraleinrichtung weitere Daten verarbeitet werden, die von den Betreibern der Behälter oder z.B. auch den von Lieferanten der Flüssigkeit über Datenfernübertragung eingehen. Wenn der Behälter ein Öltank für eine Heizungsanlage ist, kann z.B. die Funktion der zugehörigen Heizungsanlage auf ähnliche Weise wie der Füllstand von der Zentraleinrichtung aus überwacht werden, wobei bei Bedarf entsprechende Reaktions-Datensignale an einen Empfänger wie z.B. eine Wartungsfirma geschickt werden.

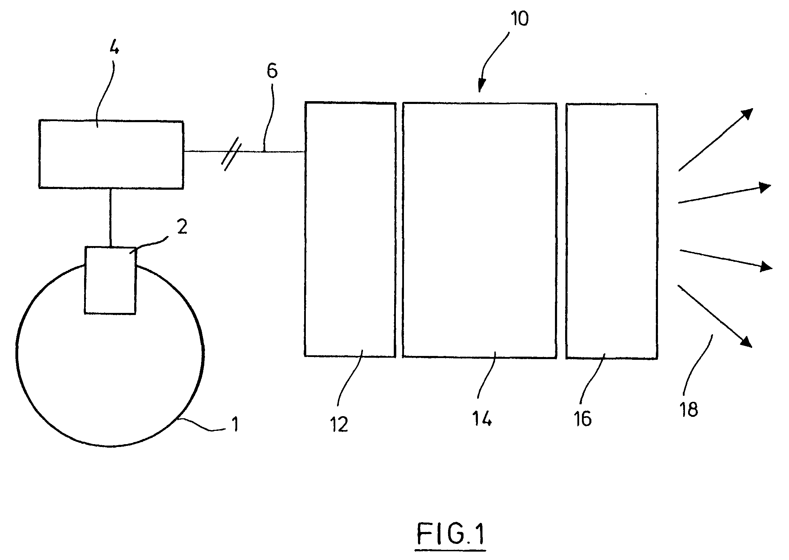

Im folgenden wird das erfindungsgemäße Verfahren durch Ausführungsbeispiele weiter erläutert. Die Zeichnung zeigt in
- Figur 1: ein Blockdiagramm zur Veranschaulichung des erfindungsgemäßen Verfahrens.

In Figur 1 ist in schematischer Weise der Ablauf eines Verfahrens zum Steuern des Füllstandes in einem zur Aufnahme einer Flüssigkeit eingerichteten Behälter dargestellt.

Bei einem Betreiber befindet sich ein Behälter 1, der zum Speichern einer Flüssigkeit dient. Der Behälter 1 kann z.B. ein Öltank in einem Privathaushalt oder einem gewerblichen Betrieb für eine Heizungsanlage, ein Kraftstofftank auf einer Tankstelle oder ein Flüssiggastank in einem Industriebetrieb sein, aber auch andere Beispiele sind denkbar.

In dem oder an dem Behälter 1 ist ein Sensor 2 angeordnet. Der Sensor 2 erfasst den Füllstand der Flüssigkeit in dem Behälter 1. Es ist nicht erforderlich, dass der Sensor 2 zum kontinuierlichen Messen des Füllstandes in der Lage sein muss. Zum Durchführen des Verfahrens genügt es bereits, wenn der Sensor 2 als Füllstandwächter konzipiert ist, d.h. wenn er anspricht, sobald der Füllstand unter einen vorgegebenen Pegel absinkt. Für den Sensor 2 gibt es zahlreiche Ausführungsformen. Ein technisch einfaches Beispiel für den Sensor 2 ist eine Einrichtung mit einem Schwimmer an einem drehbar gelagerten Hebel, der einen Quecksilberschalter kippt und somit durchschaltet, wenn der Füllstand unter ein vorgegebenes Niveau abfällt. Andere Ausführungsformen bis hin zu Einrichtungen, die Reflexionen von Mikrowellensignalen messen, um den Füllstand in dem Behälter 1 kontinuierlich zu bestimmen, sind ebenfalls möglich.

Der Sensor 2 gibt ein Sensorsignal ab, das den Füllstand repräsentiert. Dies kann z.B. ein aktiv ausgegebenes Signal sein; unter einem Sensorsignal ist aber auch z.B. eine Spannung zu verstehen, die an einem mit dem Füllstand veränderlichen Widerstand abgegriffen wird. Je nach Konzeption des Sensors 2 ist das Sensorsignal ein Maß für den aktuellen Füllstand oder ein Signal, das lediglich darüber informiert, ob der Füllstand oberhalb oder unterhalb eines vorgegebenen Pegels liegt; aber auch Sensorsignale mit anderem Informationsgehalt sind denkbar. Das Sensorsignal entsteht in dem Sensor 2 oder einer Elektronikeinrichtung 4.

In der Elektronikeinrichtung 4 wird das Sensorsignal in ein Füllstand-Datensignal gewandelt, das das Sensorsignal und damit den Füllstand repräsentiert. Das Füllstand-Datensignal kann auch zusätzliche Information enthalten, z.B. eine Standortangabe für den Betreiber des Behälters 1. Es ist zur Übertragung auf einem Datenfernübertragungs-Weg 6 geeignet.

Für die Datenfernübertragung eignen sich verschiedene Möglichkeiten, z.B. Standleitungen, Telefonleitungen, Handys oder das Internet. Die auf die Art der jeweiligen Datenfernübertragung abgestimmten Einrichtungen, wie z.B. ein Handy, ein Computer mit Modem oder ISDN-Karte, usw., sind in dem Blockdiagramm gemäß Figur 1 der Elektronikeinrichtung 4 zuzurechnen.

Das Füllstand-Datensignal wird über den Datenfernübertragungs-Weg 6 zu einer Zentraleinrichtung 10 geleitet. Die Zentraleinrichtung 10 enthält eine Eingangsschnittstelle 12 für eingehende Datensignale, eine Datenverarbeitungsanlage 14 und eine Ausgangsschnittstelle 16 für ausgehende Datensignale. Die Zentraleinrichtung 10 befindet sich außerhalb der Sphäre des Betreibers des Behälters 1 und ist zum Empfangen und Verarbeiten von Füllstand-Datensignalen einer Vielzahl miteinander nicht in Beziehung stehender Behälter eingerichtet, die also z.B. einer Vielzahl voneinander unabhängiger Unternehmen oder Privatpersonen gehören können. Die Füllstand-Datensignale, die den einzelnen Behältern zugeordnet sind, kommen an der Eingangsschnittstelle 12 an.

Wann das dem Behälter 1 zugeordnete Füllstand-Datensignal abgeschickt wird, hängt von der Anordnung im jeweiligen Einzelfall ab. Hierfür sind viele verschiedene Varianten möglich. So kann z.B. in regelmäßigen Zeitabständen, die von der Elektronikeinrichtung 4 vorgegeben werden, der Sensor 2 dazu veranlasst werden, den Füllstand zu erfassen, und das entsprechende Füllstand-Datensignal wird anschließend an die Zentraleinrichtung 10 ausgegeben. Bei einer anderen Ausführungsform wird nur dann ein Füllstand-Datensignal übertragen, wenn der Füllstand in dem Behälter 1 unter einen vorgegebenen Pegel gesunken ist. Es ist auch denkbar, von der Zentraleinrichtung 10 aus in regelmäßigen Zeitabständen oder auch basierend auf dem bisherigen Verlauf des Füllstands in dem Behälter 1 ein Abfragesignal abzuschicken, das die Elektronikeinrichtung 4 dazu veranlasst, ein aktuelles Füllstand-Datensignal zu erzeugen und zu der Zentraleinrichtung 10 zu übertragen.

In der Datenverarbeitungsanlage 14 der Zentraleinrichtung 10 wird das Füllstand-Datensignal, das, wie erläutert, Information über den Füllstand aufweist, aber auch zusätzliche Information enthalten kann, verarbeitet. Dies geschieht im Zusammenhang mit Vorgabedaten, die für den Behälter 1 bzw. den Betreiber des Behälters 1 spezifisch sind. Wie diese Verarbeitung abläuft und zu welchen Ergebnissen sie führen kann, hängt vom Einzelfall ab.

Wenn z.B. das Füllstand-Datensignal Information über den kontinuierlichen Füllstand enthält, erfolgt ein Vergleich mit einem oder mehreren Sollwerten für den Füllstand, der oder die in den spezifischen Vorgabedaten enthalten sind. Je nachdem, welcher der Sollwerte unterschritten ist, könnte das Ergebnis der Verarbeitung sein, dass der Behälter 1 nachgefüllt werden sollte. In den Vorgabedaten kann aber auch eingetragen sein, dass der Behälter 1 erst so spät wie möglich nachgefüllt werden soll, was das Ergebnis der Verarbeitung entsprechend beeinflusst. Im vorliegenden Beispiel legen die Vorgabedaten ferner fest, dass dann, wenn die erläuterte Auswertung des Füllstandes ein Nachfüllen verlangt, auch unmittelbar eine Nachlieferung der Flüssigkeit veranlasst werden soll. Das Ergebnis der Verarbeitung lautet daher, eine Nachlieferung der Flüssigkeit zu veranlassen, was unten näher erläutert wird.

In einem anderen Beispiel bewirkt der Sensor 2 nur dann ein Füllstand-Datensignal, wenn der Füllstand in dem Behälter 1 auf 20 % des Behälterinhalts abgesunken ist. Die Vorgabedaten enthalten in diesem Beispiel den Wunsch des Betreibers des Behälters 1, dass eine Nachlieferung der Flüssigkeit erst dann veranlasst wird, nachdem er dies ausdrücklich bestätigt hat. Lediglich, wenn nach 10 Tagen noch keine Bestätigung eingegangen ist, soll eine Nachlieferung der Flüssigkeit veranlasst werden. In diesem Beispiel lautet also das Ergebnis der Verarbeitung, die Bestätigung von dem Betreiber des Behälters 1 anzufordern. Ferner wird in der Zentraleinrichtung 10 nachgehalten, wie viel Zeit seit dieser Anforderung verstrichen ist.

Es sind viele weitere Beispiele für den Ablauf der Verarbeitung in der Datenverarbeitungsanlage 14 in Abhängigkeit von dem Füllstand-Datensignal und den Vorgabedaten denbkbar. Insbesondere können in derselben Zentraleinrichtung 10 auch ganz unterschiedliche Verarbeitungsweisen ablaufen, die auf die einzelnen mit der Zentraleinrichtung 10 in Verbindung stehenden Betreiber von Behältern zugeschnitten sind.

Wenn das Ergebnis der Verarbeitung festliegt, werden daraus in der Zentraleinrichtung 10 Reaktionsdaten erzeugt, die den weiteren Verfahrensablauf festlegen. Die Reaktionsdaten geben an, wer auf welche Weise und mit welcher Information angesprochen wird, um letztlich zu bewirken, dass der Behälter 1 nachgefüllt wird.

Die Reaktionsdaten werden in der Ausgangsschnittstelle 16 in Reaktions-Datensignale umgesetzt, die über Datenfernübertragungs-Wege 18 (z.B. über Internet, Telefon, Handy oder eine Standleitung) zu mindestens einem Empfänger weitergeleitet werden.

War das Ergebnis der erläuterten Verarbeitung, dass sofort eine Nachlieferung der Flüssigkeit veranlasst werden soll, und zwar im Beispiel entsprechend den Vorgabedaten bei einem bestimmten Händler, werden Reaktions-Datensignale zu diesem Händler gesandt. Sie informieren den Händler darüber, dass der Betreiber des Behälters 1 sobald wie möglich eine bestimmte Flüssigkeitsmenge benötigt. Dies veranlasst den Händler zu einer baldigen Lieferung. Für den Händler ist von Vorteil, dass er die benötigte Flüssigkeitsmenge kennt und unter Berücksichtigung anderer Aufträge, die ebenfalls über die Zentraleinrichtung 10 eingehen, eine zuverlässige Planung für eine für ihn kostengünstige Route durchführen kann.

In einem anderen Beispiel werden die Reaktions-Datensignale entsprechend dem Ergebnis der Verarbeitung an den Betreiber des Behälters 1 gesendet, um dessen Bestätigung einzuholen. Es gibt verschiedene Möglichkeiten, wie eine Bestätigung angefordert werden kann. Beispiele sind ein automatisierter Telefonanruf oder eine E-mail-Nachricht, aber auch vollautomatische Varianten sind denkbar. Zum Beispiel kann automatisch ein Kontostand überprüft werden, und die Bestätigung wird automatisch erteilt, sobald der Kontostand eine vorgegebene Höhe überschreitet. Die Bestätigung wird vorzugsweise über die Zentraleinrichtung 10 verarbeitet, die dafür sorgt, dass letztlich ein Händler Datensignale empfängt, die in dazu veranlassen, die Flüssigkeit in der erforderlichen Menge an den Betreiber des Behälters 1 zu liefern.

Das Verfahren eröffnet auch die Möglichkeit, einen von mehreren in Frage kommenden Händlern in einem automatischen Preisvergleichsverfahrens auszuwählen. In einem Beispiel für diese Variante enthalten die für den Betreiber des Behälters 1 spezifischen Vorgabedaten die Information, dass ein derartiges Auswahlverfahren gewünscht wird, und gegebenenfalls, welche Händler dafür in Frage kommen. Alternativ könnte eine Liste potentieller Händler von der Zentraleinrichtung 10 zur Verfügung gestellt werden. Das Ergebnis der Verarbeitung des Füllstand-Datensignals mit den Vorgabedaten lautet hierbei, dass derjenige aus einer gegebenen Menge von Händlern eine bestimmte Menge Flüssigkeit an den Betreiber des Behälters 1 liefern soll, der den günstigsten Preis bietet. Entsprechende Reaktions-Datensignale werden an die in Frage kommenden Händler übertragen. Diese können nun z.B. mit Hilfe eines händlerspezifischen Algorithmus oder anhand einer Datentabelle bestimmen, zu welchem Preis sie die ihnen mitgeteilte Menge an Flüssigkeit an den ihnen bekannten Ort liefern wollen. Dieser Preis wird vorzugsweise an die Zentraleinrichtung 10 übermittelt, die die einzelnen Angebote der angesprochenen Händler vergleicht und einem Händler über ein entsprechendes Datensignal den Zuschlag gibt.

Die Datenfernübertragung über Internet bietet den Vorteil, dass die Kommunikation auf der Benutzerseite (Betreiber des Behälters, Händler) teilweise oder sogar vollständig über einen Standard-Browser erfolgen kann, während die spezifischen Programme, die im wesentlichen für den Ablauf des Verfahrens sorgen, in der Zentraleinrichtung ablaufen. Die Benutzerseite kommt daher mit einem Minimum an Programmen aus, weshalb der Aufwand für Programmpflege gering ist.

## Patentansprüche

1. Verfahren zum Steuern des Füllstandes in einem zur Aufnahme einer Flüssigkeit eingerichteten Behälter (1), mit den Schritten:
- Erfassen des Füllstandes mit einem in dem oder an dem Behälter (1) angeordneten Sensor (2),
- Wandeln eines von dem Sensor (2) abgegebenen Sensorsignals in ein Füllstand-Datensignal, das den Füllstand repräsentiert,
- Übertragen des Füllstand-Datensignals mittels Datenfernübertragung zu einer Zentraleinrichtung (10), die zum Empfangen und Verarbeiten von Füllstand-Datensignalen einer Vielzahl miteinander nicht in Beziehung stehender Behälter eingerichtet ist,
- in der Zentraleinrichtung (10), Verarbeiten des dem Füllstand-Datensignal entsprechenden Füllstands mit Vorgabedaten,
- in der Zentraleinrichtung (10), Erzeugen von Reaktionsdaten in Abhängigkeit von dem Ergebnis der Verarbeitung,
- in Abhängigkeit von den Reaktionsdaten, Übertragen von Reaktions-Datensignalen mittels Datenfernübertragung von der Zentraleinrichtung (10) zu mindestens einem Empfänger,
- Veranlassen eines zum Nachliefern der Flüssigkeit eingerichteten Empfängers zum Nachfüllen des Behälters (1) in Antwort auf empfangene Datensignale.

2. Verfahren nach Anspruch 1, **dadurch gekennzeichnet, dass** die Vorgabedaten von einem Füllstand-Vorgabewert unabhängige Information enthalten, die bei der Erzeugung der Reaktionsdaten berücksichtigt wird.

3. Verfahren nach Anspruch 1 oder 2, **dadurch gekennzeichnet, dass** der die Reaktions-Datensignale empfangende Empfänger ein zum Nachliefern der Flüssigkeit eingerichteter Empfänger ist und das Nachliefern der Flüssigkeit automatisch von den empfangenen Datensignalen veranlaßt wird.

4. Verfahren nach Anspruch 1 oder 2, **dadurch gekennzeichnet, dass** der die Reaktions-Datensignale empfangende Empfänger der Betreiber des Behälters (1) ist und das Nachliefern der Flüssigkeit nach Bestätigung durch den Betreiber des Behälters (1) über mittels Datenfernübertragung übertragene Datensignale veranlaßt wird.

5. Verfahren nach einem der Ansprüche 1 bis 4, **dadurch gekennzeichnet, dass** ein zum Nachliefern der Flüssigkeit eingerichteter Empfänger in einem automatischen Preisvergleichsverfahren aus mehreren zum Nachliefern der Flüssigkeit eingerichteten Empfängern ausgewählt und veranlaßt wird, den Behälter (1) nachzufüllen.

6. Verfahren nach einem der Ansprüche 1 bis 5, **dadurch gekennzeichnet, dass** die Datenfernübertragung über mindestens eine der aus der folgenden Gruppe ausgewählten Möglichkeiten erfolgt: Handy, Telefon, Internet, Standleitung.
